# EUROPEAN PATENT SPECIFICATION

(11) **EP 4 273 509 B1**
(45) Date of publication and mention of the grant of the patent: **29.01.2025**
(21) Application number: 22171178.1
(22) Date of filing: 02.05.2022
(51) Int. Cl.: G01D 5/353

(54) **DEVICE AND METHOD FOR DISTRIBUTED SENSING, PREFERABLY IN A STAR NETWORK**
VORRICHTUNG UND VERFAHREN ZUR VERTEILTEN ABTASTUNG, VORZUGSWEISE IN EINEM STERNNETZ
DISPOSITIF ET PROCÉDÉ DE DÉTECTION DISTRIBUÉE, DE PRÉFÉRENCE DANS UN RÉSEAU EN ÉTOILE

(43) Date of publication of application: 08.11.2023
(73) Proprietor: Omnisens S.A., 1110 Morges (CH)
(72) Inventor: ROCHAT, Etienne, 1412 VALEYRES SOUS URSINS (CH); GOY, Alexandre, 1404 CUARNY (CH)
(74) Representative: IPAZ

(56) References cited:
- EP-A1- 3 722 755
- WO-A1-2021/038407
- US-A1- 2013 292 555
- US-A1- 2014 211 202
- US-A1- 2022 018 980

## Description

### Technical field

The present invention relates to device and method for distributed sensing, preferably in a star network.

The invention preferably relates to distributed or fully distributed sensors, in which an optical fiber is a long uninterrupted sensor, and the measured information are extracted from the analysis of backscattered light.

The backscattered light can typically come from the following scatterings:
- Rayleigh scattering, which is the interaction of a light pulse with material impurities (a typical example would be the scattering of sunlight by dust particles in the atmosphere giving to the sky different colors depending on the incident angle of the sun light). It is the largest of the three backscattered signals in silica fibers and has the same wavelength as the incident light. Rayleigh scattering is the physical principle behind Optical Time Domain Reflectometer (OTDR).
- Brillouin scattering, which is the interaction of a light pulse with thermally excited acoustic waves (also called acoustic phonons). Acoustic waves, through the elasto-optic effect, slightly and locally modify the index of refraction. The corresponding moving grating reflects back a small amount of the incident light and shifts its frequency (or wavelength) due to the Doppler Effect. The shift depends on the acoustic velocity in the fiber while its sign depends on the propagation direction of the travelling acoustic waves. Thus, Brillouin backscattering is created at two different frequencies around the incident light, called the Stokes and the Anti-Stokes components. In silica fibers, the Brillouin frequency shift is in the 10GHz range (0.1nm in the 1550nm wavelength range) and is temperature and strain dependent.
- Raman scattering, which is the interaction of a light pulse with thermally excited atomic or molecular vibrations (optical phonons) and is the smallest of the three backscattered signals in intensity.

Raman scattering exhibits a large frequency shift of typically 13THz in silica fibers, corresponding to 100nm at a wavelength of 1550nm. The Raman Anti-Stokes component intensity is temperature dependent whereas the Stokes component is nearly temperature insensitive.

### State of the Art

Most of the assets measured or monitored using DFOS (Distributed Fibre Optic Sensing) are linear. This is the case for power cable, for oil and gas pipeline, likewise for water pipeline. In such linear system, the limit is the maximum measurement range.

There are some structures that are similar to star network configuration rather than linear configuration. These are for instance the inter-array cable (IAC) inside windfarm or the gathering lines for the pipeline industry or the fibre-based telecommunication network (point-to-multipoint fiber-to-the-home (FTTH) network, also defined as a PON network) or lines in water / gas/ distribution pipelines or in sewage.

Monitoring of such a star network is difficult.

One possibility is to use multiple channels that are measured one after the other, in sequence. This is only possible when the targeted events have a slow time constant with respect to the sequence. For example, measuring temperature with a Distributed Temperature Sensing (DTS) is compatible with a sequence/channel-based approach. Assuming 10 channels and 3min to measure one channel, then every channel is measured twice per hour. Given that the time constant of an IAC on thermal variation is in the 3h to 5h range, there is still a good coverage of the temperature.

This is not the case when looking at short event like anchor drop and short circuit. A short circuit may last for a few 10s of milliseconds. In other words, when using a 5min measurement and 30min sequence, most of the short circuits will not be detected, as they will appear in the non-measured channel. In this case, a sequence/channel-based approach is not possible.

One could:
- use one Distributed Acoustic Sensing (DAS) sensor for each channel, but this solution is very expensive,
- use one DAS sensor for several channels, by means of a very fast optical switch, such like in patent EP317253381, but this kind of solution is still technically complex and/or expansive, due to backreflection from switch and the need for perfect synchronization between pulse and switches. EP3722755 discloses distributed optical fibre sensors using a switch technology. US 2022/0018980 discloses a method and system for distributed fibre optic sensing using a switch technology. WO 2021/038407 discloses a versatile optical fiber sensor and method for detecting red palm weevil, farm fires and soil moisture using a switch technology.

US 2013/0292555 discloses an apparatus and method utilizing optical sensors operating in the reflection mode.

The goal of the invention is to present a device and/or method for distributed sensing, preferably arranged for a star network, that is less complex and/or less expensive than prior art but preferably with similar or better performances.

### Summary of the Invention

An aspect of the invention concerns a device for distributed sensing comprising:
- a pump generator arranged for generating an (preferably pulsed) optical pump signal,
- An optical pump splitter configured to receive the pump signal and to split the pump signal in a number N of channels , each channel comprising an optical fiber or a connector arranged for connecting an optical fiber,
- A controller configured to control the pump splitter,
- An optical receiver arranged for receiving a backscattered signal from the optical fiber or from the connector of each channel,
characterized in that:
- the optical pump splitter comprises a gating system comprising a gate for each channel among the N channels, each gate associated to a given channel being arranged for having :
   ∘ an open state allowing the pump signal to go from the pump generator to the optical fiber or the connector of the associated channel, and
   ∘ a closed state for which the pump signal cannot go from the pump generator to the optical fiber or the connector of the associated channel.

The pump signal is preferably a pulsed pump signal, and the controller is preferably arranged and/or programmed so that each gate is, preferably one after the other, in its open state a longer time than the duration of the pulsed pump signal in order to allow the pulsed pump signal to fully pass or go through the gate in its open state.

The controller can be arranged and/or programmed in order to avoid injecting the pump signal in at least two channels at the same time.

The optical receiver can comprise, for each channel, a circulator, arranged for:
- directing the pump signal from the gate of this channel in its open state to the optical fiber or the connector of this channel but not to the optical receiver
- directing the backscattered signal from the optical fiber or the connector of this channel to the optical receiver but not to the gate of this channel.

The backscattered signal can comprise a Rayleigh backscattered signal, a Brillouin backscattered signal, or a Raman backscattered signal.

Each channel can comprise an optical fiber monitoring a cable, pipe, branch or string of a star network, preferably monitoring an inter array cable of a star network of a wind farm.

At least one of the channels can be arranged for monitoring several cables, pipes, branches and/or strings departing in several different directions from a central position of the star network, the optical fiber of this at least one channel going back and forth with respect to the central position.

Each channel can comprise an optical fiber monitoring at least one cable, pipe, branch and/or string of at least one among a pipeline network, a transport network such like a road or rail network, a telecommunication network, an information network, or an electrical network.

The optical receiver can comprise a detector shared for all the channels.

The controller can be arranged and/or programmed in order to allow at least two gates to be in the open state at the same time.

Another aspect of the invention concerns a wind farm comprising a device according to the invention.

Another aspect of the invention concerns a method for distributed sensing comprising:
- generating, by a pump generator, an (preferably pulsed) optical pump signal,
- splitting, by an optical pump splitter, the pump signal in a number N of channels, each channel comprising an optical fiber or a connector arranged for connecting an optical fiber,
- receiving, by an optical receiver, a backscattered signal from the optical fiber or from the connector of each channel,
characterized in that:
- the splitting step is implemented with a gating system comprising a gate for each channel among the N channels, each gate associated to a given channel having:
   ∘ an open state allowing the pump signal to go from the pump generator to the optical fiber or the connector of the associated channel, and
   ∘ a closed state for which the pump signal cannot go from the pump generator to the optical fiber or the connector of the associated channel.

The pump signal is preferably a pulsed pump signal, and each gate is preferably, preferably one after the other, in its open state a longer time than the duration of the pulsed pump signal in order to allow the pulsed pump signal to fully pass or go through the gate in its open state.

The splitting step can avoid injecting the pump signal in at least two channels at the same time.

The optical receiver can comprise, for each channel, a circulator:
- directing the pump signal from the gate of this channel in its open state to the optical fiber or the connector of this channel but not to the optical receiver
- directing the backscattered signal from the optical fiber or the connector of this channel to the optical receiver but not to the gate of this channel.

The backscattered signal can comprise a Rayleigh backscattered signal, a Brillouin backscattered signal, or a Raman backscattered signal.

Each channel can comprise an optical fiber monitoring a cable, pipe, branch or string of a star network, preferably monitoring an inter array cable of a star network of a wind farm.

At least one of the channels can be monitoring several cables, pipes, branches and/or strings departing in several different directions from a central position of the star network, the optical fiber of this at least one channel going back and forth with respect to the central position.

Each channel can comprise an optical fiber monitoring at least one cable, pipe, branch and/or string of at least one among a pipeline network, a transport network such like a road or rail network, a telecommunication network, an information network, or an electrical network.

The optical receiver can comprise a detector shared for all the channels.

The splitting step can allow at least two gates to be in the open state at the same time.

The method according to the invention can be used for monitoring a wind farm.

### Detailed description of the figures

### and of realization modes of the invention

Other advantages and characteristics of the invention will appear upon examination of the detailed description of embodiments which are in no way limitative, and of the appended drawings in which:
- Figure 1 is a schematic view of a first embodiment 101 of a device according to the invention,
- Figure 2 shows, as a function of time, the generation or emission of the pulsed pump 5, the states of the gates 21, and the detected backscattered signal 6, in device 101
- Figure 3 is a schematic view of a second embodiment 102 of a device according to the invention,
- Figure 4 shows, as a function of time, the generation or emission of the pulsed pump 5, the states of the gates 21 and 11, and the detected backscattered signal 6, in device 102
- Figure 5 is an organigram of few steps of an embodiment of a method according to the invention implemented in device 101 or 102.

These embodiments being in no way limitative, we can consider variants of the invention including only a selection of characteristics subsequently described or illustrated, isolated from other described or illustrated characteristics (even if this selection is taken from a sentence containing these other characteristics), if this selection of characteristics is sufficient to give a technical advantage or to distinguish the invention over the state of the art. This selection includes at least one characteristic, preferably a functional characteristic without structural details, or with only a part of the structural details if that part is sufficient to give a technical advantage or to distinguish the invention over the state of the art.

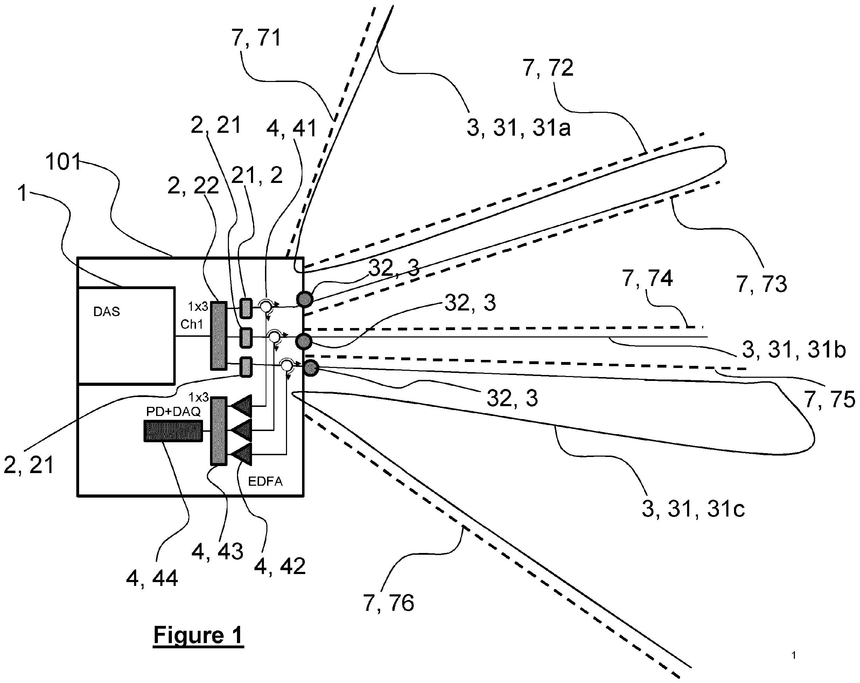

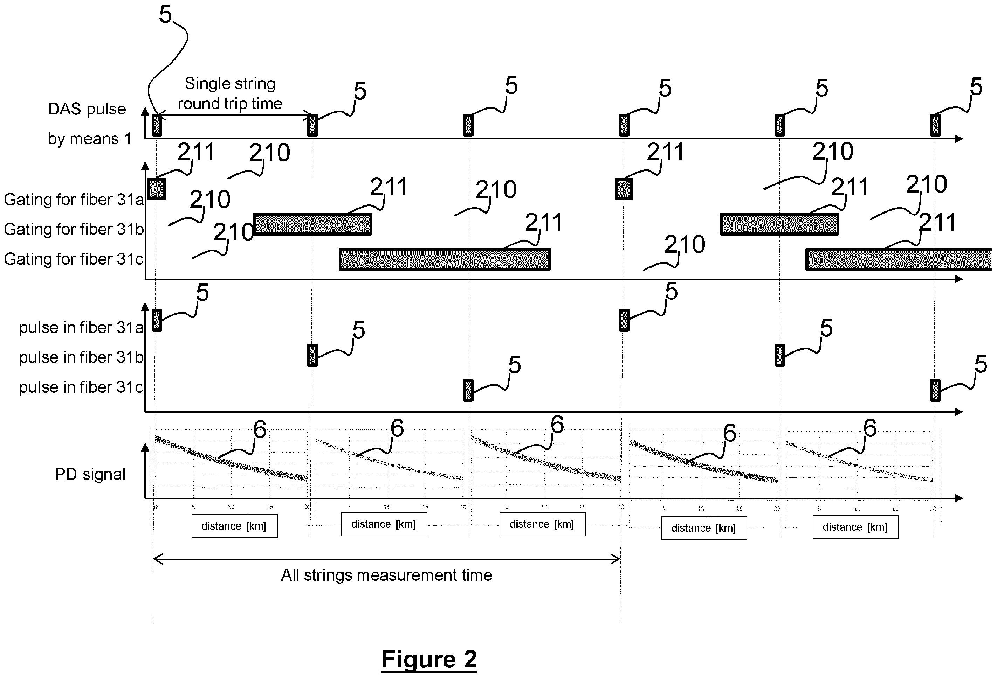

We are now going to describe, in references to figures 1 and 2, the first embodiment of a device 101 according to the invention.

Device 101 for distributed sensing comprises a pump generator 1 arranged for generating a pulsed optical pump signal 5.

"Pulsed" optical signal 5 means a pulse regardless of its duration, for example short duration (of the order of a picosecond or femtosecond) or long duration (of the order of a few minutes or longer) or intermediate duration.

Pulse 5 duration is typically from one picosecond to 10 microseconds.

Pump generator 1 comprises typically a laser or a light-emitting diode, arranged for generating or emitting signal 5:
- having a wavelength comprised between 1520 and 1560 nm, and/or
- having a power comprised between 1 and 500 mW before being split by an optical pump splitter 2, and/or
- having a duration between 10ns and 300ns.

However other kind of pump generator 1 may be employed within the scope of this invention.

Device 101 comprises the optical pump splitter 2 configured to receive the pump signal 5 and split the pump signal 5 in a number N of channels 3 (N being an integer greater than or equal to 2), each channel 3 comprising an optical fiber 31 and/or a connector 32 arranged for connecting an optical fiber 31.

Each connector 32 can also be called "pump connector" 32 as it is arranged and used to connect one of the fibers 31 to the pump generator 1.

Each fiber 31 is typically:
- monomode in case of Brillouin or Rayleigh backscattered signal 6, or
- monomode or multimode in case of Raman backscattered signal 6
and can be a single optical fiber or can comprise a fiber bundle (typically comprising few tens of individual fibers).

Connector 32 comprise a standard connector for optical fiber 31 according to prior art or other suitable connection means.

The optical pump splitter 2 comprises:
- an optical coupler 22, arranged for dividing the pulse 5 from pump generator 1 into one pulse 5 for each channel 3
- a gating system comprising a gate 21 for each channel 3 among the N channels, each gate 21 associated to a given channel 3 being arranged for having :
   ∘ an open state 211 allowing the pump signal 5 to go from the pump generator 1 to the optical fiber 31 or to the connector 32 of the associated channel 3, and
   ∘ a closed state 210 for which the pump signal 5 cannot go from the pump generator 1 to the optical fiber 31 or to the connector 32 of the associated channel 3.

Each gate 21 can also be called "pump gate" 21 as it is arranged and used to control if the pump signal 5 enters into one of the fibers 31 or not.

Each gate 21 could be home designed using:
- a semi-conductor optical amplifier (SOA) and an electrical control signal, or
- a shutter and an electrical control signal.

The pump signal is a pulsed signal, and each gate 21 is (preferably one after the other) in its open state a longer time than the duration of the pulsed pump signal 5 in order to allow the pulsed pump signal to fully pass or go through the only one gate in its open state while the pump signal 5 reaches the gates 21.

Device 101 comprises a controller (not illustrated) configured to control the optical pump splitter 2. The controller can include at least one computer, one central processing or computing unit, one analogue electronic circuit (preferably dedicated), one digital electronic circuit (preferably dedicated) and/or one microprocessor (preferably dedicated) and/or software means or other control means known in the art for controlling the optical pump splitter 2.

Device 101 comprises an optical receiver 4 arranged for receiving a backscattered signal 6 from the optical fiber 31 or from the connector 32 of each channel 3, this backscattered signal 6 being generated in fiber 31 in response to the pump signal 5.

As illustrated in figure 1, the optical fiber 31 of each channel 3 is arranged for monitoring a cable or pipe 7 (also referenced 71 to 76, and also called branch or string) of a star network, preferably monitoring an inter array cable of a star network of a wind farm.

More precisely, each channel 3 comprises an optical fiber 31 monitoring at least one cable of a pipeline network, a transport network such like a road or rail network, a telecommunication network, an information network, or an electrical network.

The proposed solution of device 101 is thus a time-division multiplexing of the pump signal 5. In this way, each branch (cable or pipe) 7 can be covered by a single fiber 31 providing also a better signal quality.

At least one channel 3 is arranged for monitoring several branches 7 departing in several different directions from a central position of the star network; this at least one channel 3 going back and forth several times with respect to the central position. For example:
- Channel 3 comprising optical fiber 31a is arranged for monitoring several cables or pipes 71, 72, 73 departing in several different directions from a central position of the star network, the optical fiber 31a of this channel 3 going back and forth with respect to the central position, each outward path and/or each return path of fiber 31a monitoring one of the cables or pipes 71, 72, 73
- Channel comprising optical fiber 31c is arranged for monitoring several cables or pipes 75, 76 departing in several different directions from a central position of the star network, the optical fiber 31c of this channel 3 going back and forth with respect to the central position, each outward path and/or each return path of fiber 31c monitoring one of the cables or pipes 75, 76

Thus, for short event measurement and/or simultaneous measurement, it is possible to design the sensing path of fiber 31 by following one branch (cable or pipe) 7 to the end (following what is known as a string in the windfarm jargon) and come back to the device 101 (i.e. to the central position of the star network, known as the offshore substation in the windfarm jargon) before going to the next branch 7, as illustrated in Figure 1.

In case of fiber 31c, the return path is useless. Assuming that each branch 7 is 10km long and the range of the Distributed Acoustic Sensing (DAS) device 101 is 50km, then it is possible to measure three strings 7 only per fiber 31, with two return paths, each of 10km (10km sensing - 10km return - 10km sensing - 10km return - 10km sensing). In this specific example of fiber 31c, 40% of the fiber length is not employed for active measurement (the return paths).

As illustrated by fiber 31a in Figure 1, some strings 7 (72 and 73) may be connected by a fiber 31a at the far end. In this case the full measurement range can be used.

As illustrated in figure 2, the controller is arranged and/or programmed in order to avoid injecting the pump signal 5 in at least two channels 3 at the same time.

Pump generator 1 is arranged for generating pulse 5 several times, preferably at a temporal period Tₚ.

The controller is arranged in such a way that, each time pulse 5 is generated, this pulse 5 is split by the optical pump splitter 2 and reach each gate 21 of each channel 3, but only one of this gate 21 is in its open state 211, the other ones are in the closed state 210.

The controller is arranged in such a way that the gates 21 are in their open state 211 one after the other, and in such a way that, for a temporal period T_{N} comprising N generated pulses 5 for N gates of N channels 3, pulse number i (i an integer equal to 1 to N), reaches all the gates 21 but only gate 21 number i of channel 3 number i is in its open state. This way, during a temporal period T_{N} (T_{N} = N x T_{P}), every fiber 31 of every channel 3 receives one by one pulse 5, one after the other.

Also, as illustrated by figure 2, the controller is arranged and/or programmed in order to optionally allow at least two gates 21 to be in the open state 211 at the same time, as long as they are not open at the same time when pulse 5 is reaching these at least two gates 21.

This perfectly illustrates technical advantages of device 101 according to the invention, compared to prior art (especially compared to a prior art solution using a very fast optical switch):
- device 101 is less complex and less expensive, as a very precise synchronization between pulse 5 and a control of the gates 21 is not necessary, because at least two gates 21 can be open at the same time, or not, as long as they are not open at the same time when pulse 5 is reaching these at least two gates 21,
- device 101 avoids backreflection from a switch,
- device 101 can even be faster compared to prior art, because a second gate 21 can be ready in its open state before the previous gate 21 goes from its open state 211 to its closed state 210 (on the contrary, a switch cannot be "open" for two channels at the same time, and a switching time between two channels is necessary).

The fiber 31 reached by signal 5 is generating a backscaterred signal 6.

The backscattered signal 6 comprises a Rayleigh backscattered signal, a Brillouin backscattered signal, or a Raman backscattered signal. In case of figures 1 and 2, the backscattered signal 6 comprises a Rayleigh backscattered signal, a Brillouin backscattered signal (without use of a probe signal for stimulating this Brillouin backscattered signal), or a Raman backscattered signal.

The optical receiver 4 typically comprises, for each channel 3, a circulator 41. For each channel 3, the circulator 41 of this channel 3 is arranged for:
- directing the pump signal 5 from the gate 21 of this channel 3 in its open state 211 to the optical fiber 31 or the connector 32 of this channel 3 but not to the optical receiver 4
- directing the backscattered signal 6 from the optical fiber 31 or the connector 32 of this channel 3 to the optical receiver 4 but not to the gate 21 of this channel 3.

The optical receiver 4 typically also comprises:
- for each channel 3, an optical amplifier 42, preferably an Erbium-Doped Fiber Amplifier (EDFA), arranged for amplifying each signal 6 coming from the fiber 31 of this channel 3, preferably coming from the circulator 41 of this channel 3,
- an optical coupler 43 shared for all the channels 3, and arranged for coupling all the channels 3 (from the circulator 41 and/or amplifier 42 of the considered channel 3) to a detector 44
- the detector 44 (comprising typically a photodiode PD and a data acquisition system DAQ) shared for all the channels 3.

It is also possible to have a single EDFA (not illustrated) at the exit of the 3x1 coupler 43 (rather than having three EDFA on each input of the 3x1 coupler 43). Having the 3x1 coupler first is possible for short string only. The EDFA after is thus limited to a small channel number (reasonably up to 4) and short range.

The data or signal 6 acquired by optical receiver 4 or detector 44 is then analyzed according to the classical design of the interrogator , the controller being arranged and/or programmed to know, depending on time, from which channel 3 is coming signal 6, based on the channel 3 that most recently received the pulse 5.

The analysis is backscattering dependent, typically:
- for Distributed Acoustic Sensing (DAS): recovery of intensity and phase of the backscattering
- for Distributed Temperature Sensing (DTS)-Brillouin or Distributed Strain Sensing (DSS)-Brillouin: recovery of the frequency shift
- for Distributed Temperature Sensing (DTS)-Raman: recovery of the intensity.

Thus, in device 101, the pump signal 5 is split in N (assuming N channels 3, practically N equal three or four). But as such, the N channels 3 are synchronized (they receive the pump 5 simultaneously) and measurement by optical receiver 4 is done from each channel 3.

To maintain a "in series" measurement, the pump 5 is triggered at the max speed corresponding to the length L of the channel 3 (assuming for simplicity that the N channels 3 have an identical length L), which is N times faster than what is allowed for all the channels and a gating system let one pump 5 out of N go through to the relevant channel 3.

Detection is done easily as all channels 3 receive the pump 5 in series and a single acquisition can be done.

Let's assume three channels 3 of 25km each, for a total length of 75km. The pulse rate would be 1.33 kHz max. Here, the pulse 5 is repeated at three times the pulse rate (4kHz), with pulses i going to the first channel, pulse i+1 going to the second channel 3 and pulse i+2 going to the third channel 3 in cycles, so that each channel 3 receives pulses at 1.33 kHz in the proper timing. Performances are those of 25km in term of signal quality, since each pump 5 travels 25km only instead of 75km, with the frequency bandwidth equivalent to 75km (1.33kHz/2 to take into account sampling theory) because of the total measuring time.

Device 101 is directly compatible with any single-based measurement system (like Raman Distributed Temperature Sensing (DTS) for instance) and is not limited to a particular type of Distributed Acoustic Sensing (DAS) interrogator. In fact, it is applicable to all fiber sensing devices working with a single fiber.

Device 101 is directly compatible with a Brillouin Optical Time Domain Reflectometry (BOTDR) (temperature or strain).

It is also noted the following various advantages of device 101:
- each channel 3 has its own pump 5,
- the measurement is in series, and is thus simple and cheap
- range is not limited by folding (no range loss)
- by using a gate 21 and a circulator 41 per sensing fiber 31 with a coupler 22, there is no need for a switch with its driver (simplification) and there is no need for accurate synchronization between switches and pulses. Slow gating (no need for short transition time and fast electronic) can be used as there is "plenty" of time between pulses 5
- there is no cross talk between channels 3, as this is guaranteed by the pulse timing (no risk of overlap) and no backreflection from switching.

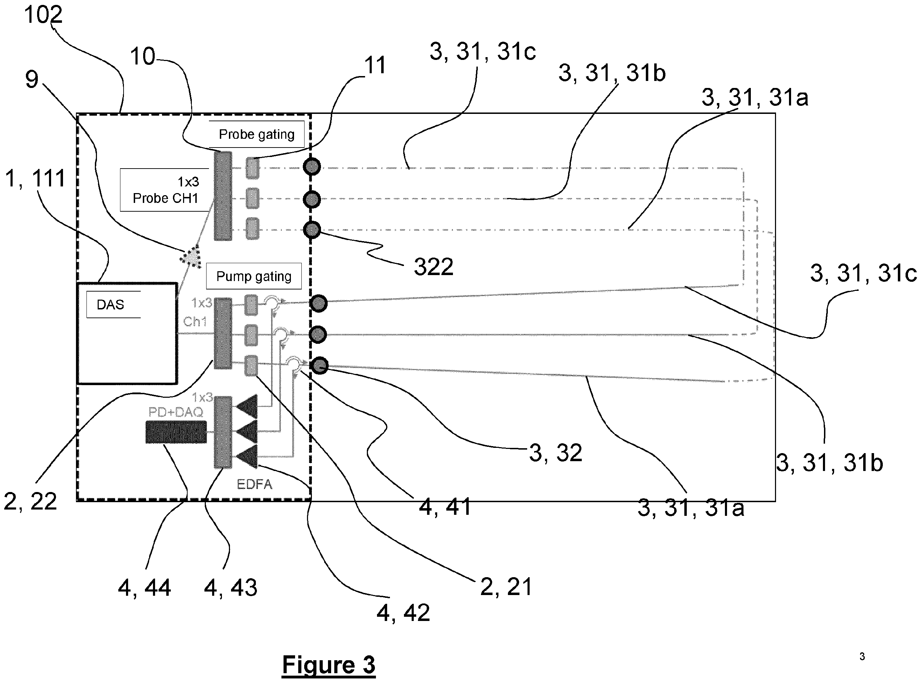

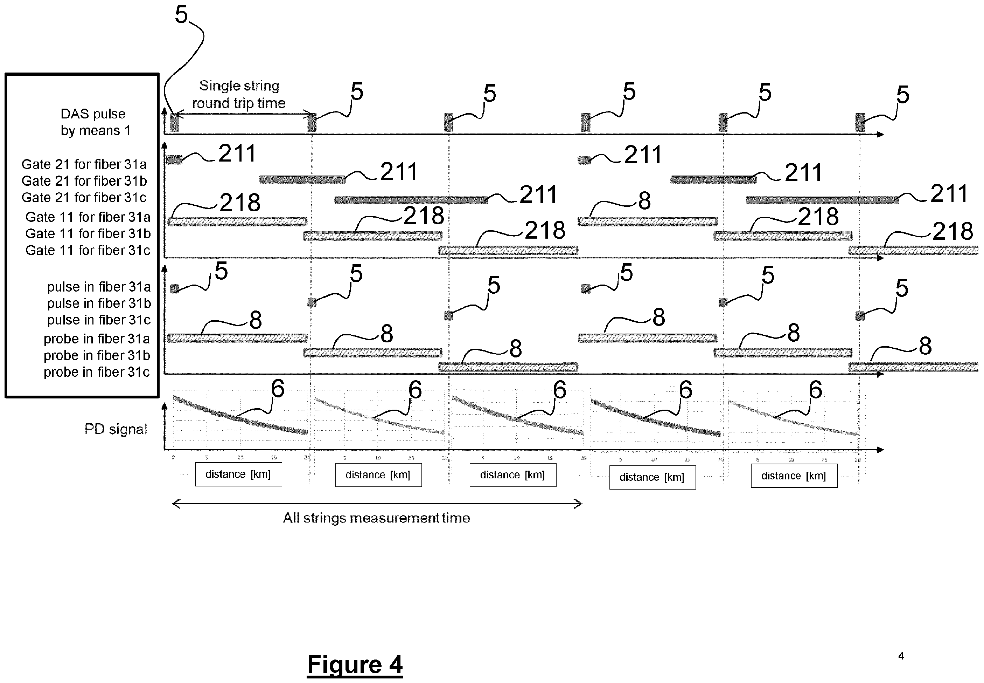

We are now going to describe, in references to figures 3 and 4, a second embodiment of a device 102 according to the invention.

Device 102 will be described only for its differences compared to device 101.

In case of figures 3 and 4, the backscattered signal 6 comprises a Brillouin backscattered signal, with use of a probe signal 8 for stimulating this Brillouin backscattered signal 6.

As illustrated by figure 3, device 102 according to the invention is directly compatible with a Brillouin Optical Time Domain Reflectometer (BOTDA) (loop configuration) by simply splitting the probe 8 in N (three in this case of figure 3) and looping on a per channel 3 basis. This could be advantageous to maintain very short spatial resolution (0.5m) over the inter array on a string basis (25km) that would not be possible on the in-series length (75km).

The pump gating does not have to be symmetric and could be adapted to match the actual length of each string, provided that it is possible to generate pump signals 5 with different time interval.

Compared to device 101, device 102 further comprises a probe generator 111 for generating the optical probe signal 8.

Probe generator 111 comprises typically a laser or a light-emitting diode.

However other kind of probe generator 111 may be employed within the scope of this invention.

The probe signal 8 typically:
- is within 8GHz and 12GHz from the pump laser wavelength and can be scanned by a few kHz steps within this range and/or
- has a power comprised between 0 and 100mW before being split by a probe splitter 10, 11, and/or
- is a continuous probe signal 8.

Compared to device 101, device 102 further comprises an amplifier 9, preferably an Erbium-Doped Fiber Amplifier (EDFA), arranged for amplifying the probe signal 8 before being the optical probe splitter 10, 11 described below.

Each channel 3 comprises an optical fiber 31 and/or:
- connector 32 arranged for connecting, to gate 21 of this channel 3, a first end of the optical fiber 31 associated to this channel 3, and
- probe connector 322 arranged for connecting, to gate 11 of this channel 3, a second end of the optical fiber 31 associated to this channel 3.

Connector 322 comprise a standard connector for optical fiber 31 according to prior art or other suitable connection means.

Compared to device 101, device 102 further comprises the optical probe splitter 10, 11 arranged for splitting the probe signal 8 in the N channels 3.

The optical probe splitter 10, 11 for splitting the probe signal 8 comprise:
- an optical coupler 10, arranged for dividing the probe 8 from probe generator 111 and amplifier 9 into one probe 8 for each channel 3,
- a gating system comprising a gate 11 for each channel 3 among the N channels 3, each gate 11 associated to a given channel 3 being arranged for having:
   ∘ an open state 218 allowing the probe signal 8 to go from the probe generator 111 for generating probe signal 8 to the optical fiber 31 or to the connector 322 of the associated channel 3, and
   ∘ a closed state for which the probe signal 8 cannot go from the probe generator 111 for generating signal 8 to the optical fiber 31 or to the connector 322 of the associated channel 3.

Each probe gate 11 could be home designed using:
- a semi-conductor optical amplifier (SOA) and an electrical control signal, or
- a shutter and an electrical control signal.

The controller (not illustrated) are arranged and/or programmed to keep the gate 11 of a given channel 3 in its open state 218 during all time signal 6 is acquired from this same channel 3 by optical receiver 4 and/or detector 44, while all the other gates 11 are in the closed state.

The gates 11 can be in the open state 218 only one by one.

The gates 21 and the gates 11 are respectively at two opposite ends of the fibers 31.

An embodiment of wind farm according to the invention comprises device 101 or 102.

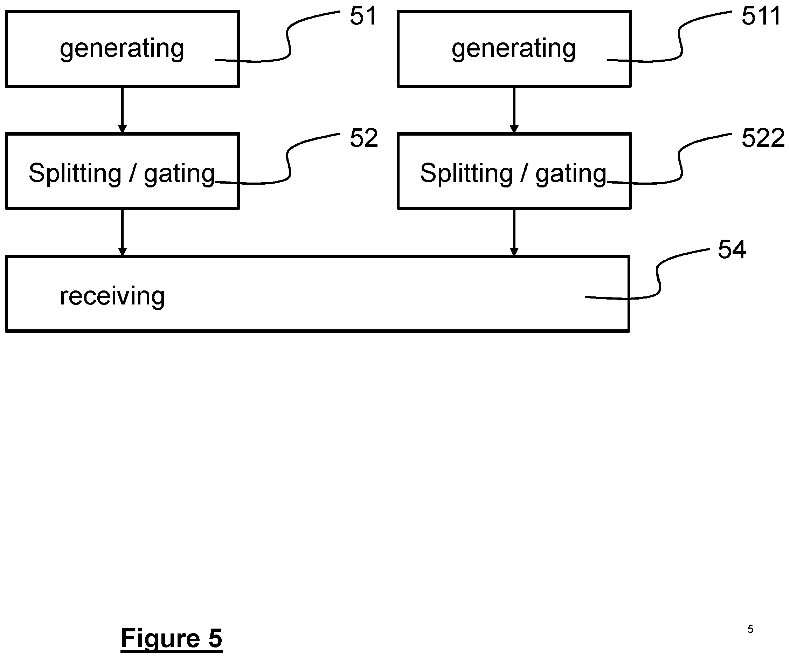

We are now going to describe, in reference to figure 5, steps of an embodiment of a method according to the invention implemented by device 101 or 102.

This method for distributed sensing comprises:
- generating 51, by the pump generator 1, the pulsed optical pump signal 5,
- splitting 52, by the optical pump splitter 2, the pump signal 5 in a number N of channels 3 (but not in the N channels at the same time), each channel 3 comprising an optical fiber 31 or connector 32 arranged for connecting an optical fiber 31, the splitting step 52 avoiding injecting the pump signal 5 in at least two channels 3 at the same time, but optionally allowing at least two gates 21 to be in the open state 211 at the same time as long as they are not open at the same time when pulse 5 is reaching these at least two gates 21; the splitting step 52 being implemented with the gating system comprising the gate 21 for each channel 3 among the N channels, each gate 21 associated to a given channel 3 having:
   o an open state 211 allowing the pump signal 5 to go from the pump generator 1 to the optical fiber 31 or to the connector 32 of the associated channel 3, and
   ∘ a closed state 210 for which the pump signal 5 cannot go from the pump generator 1 to the optical fiber 31 or to the connector 32 of the associated channel 3.
- Optionally (i.e. only in case of device 102):
   ∘ Generating 511, by the probe generator 111, the probe signal 8,
   ∘ splitting 522, by the optical probe splitter 10, 11, the probe signal 8 in the N channels 3 (but not in the N channels at the same time), the splitting step 522 avoiding injecting the probe signal 8 in at least two channels 3 at the same time; the splitting step 522 being implemented with the gating system comprising the gate 11 for each channel 3 among the N channels. In this case, the pump signal 5 enters into a fiber 31 of a channel 3 only if, at the same time, the probe signal 8 enters into the same fiber 31 of the same channel 3. Gate 11 of a given channel 3 is in its open state 218 during all time signal 6 is acquired from this same channel 3 by optical receiver 4 and/or detector 44, while all the other gates 11 are in the closed state
- receiving 54, by optical receiver 4, a backscattered signal 6 from the optical fiber 31 or from the connector 32 of each channel 3 one channel 3 after the other, the optical receiver 4 comprising, for each channel 3, a circulator 41:
   ∘ directing the pump signal 5 from the gate 21 of this channel 3 in its open state 211 to the optical fiber 31 or to the connector 32 of this channel 3 but not to the optical receiver 4
   ∘ directing the backscattered signal 6 from the optical fiber 31 or from the connector 32 of this channel 3 to the optical receiver 4 but not to the gate 21 of this channel 3.

The optical fiber 31 of each channel 3 is monitoring:
- at least one cable of a star network, preferably monitoring an inter array cable of a star network of a wind farm, and/or
- at least one cable of a pipeline network, a transport network such like a road or rail network, a telecommunication network, an information network, or an electrical network (preferably a cable of a windfarm).

At least one channel 3 is monitoring several cables departing in several different directions from the central position of the star network, the optical fiber 31 of this at least one channel 3 going back and forth with respect to the central position.

Device 101 and/or 102 is preferably used for monitoring a wind farm.

Of course, the invention is not limited to the examples which have just been described and numerous amendments can be made to these examples without exceeding the scope of the invention.

In particular, at least one fiber 31 or each fiber 31 can comprise a Fibre Bragg Grating (FBG). In this case, signal 5 is not necessary a pulsed signal 5 but can be a pulsed signal 5 or a continuous signal 5. Nevertheless, this embodiment is not a preferred embodiment, because if signal 5 is a continuous signal 5, then the gating is more complex, because the controller are then arranged and/or programmed in order to avoid at least two gates 21 to be in the open state 211 at the same time.

Of course, the different characteristics, forms, variants and embodiments of the invention can be combined with each other in various combinations to the extent that they are not incompatible or mutually exclusive. In particular, all variants and embodiments described above can be combined with each other.

## Claims

1. Device (101, 102) for distributed sensing comprising:
- A pump generator (1) arranged for generating an optical pump signal (5),
- An optical pump splitter (2) configured to receive the pump signal (5) and split the pump signal in a number N of channels (3), each channel comprising an optical fiber (31) or a connector (32) arranged for connecting an optical fiber (31), N being an integer greater than or equal to 2,
- A controller configured to control the pump splitter (2),
- An optical receiver (4) arranged for receiving a backscattered signal (6) from the optical fiber (31) or from the connector (32) of each channel,
**characterized in that**:
- The optical pump splitter (2) comprises a gating system comprising a gate (21) for each channel among the N channels, each gate associated to a given channel being arranged for having:
∘ an open state (211) allowing the pump signal to go from the pump generator (1) to the optical fiber (31) or the connector (32) of the associated channel, and
∘ a closed state (210) for which the pump signal (5) cannot go from the pump generator (1) to the optical fiber (31) or the connector (32) of the associated channel.

2. Device according to the previous claim, **characterized in that** the pump signal (5) is a pulsed pump signal (5), and the controller is arranged and/or programmed so that each gate (21) is in its open state a longer time than the duration of the pulsed pump signal (5) in order to allow the pulsed pump signal (5) to fully pass through the gate (21) in its open state.

3. Device according to claim 1 or 2, **characterized in that** the controller is arranged and/or programmed in order to avoid injecting the pump signal (5) in at least two channels at the same time.

4. Device according to any one of the previous claims, **characterized in that** the optical receiver (4) comprises, for each channel, a circulator (41), arranged for:
- directing the pump signal from the gate of this channel in its open state to the optical fiber (31) or the connector (32) of this channel but not to the optical receiver (4),
- directing the backscattered signal (6) from the optical fiber (31) or the connector (32) of this channel to the optical receiver but not to the gate of this channel.

5. Device according to any one of the previous claims, **characterized in that** the backscattered signal (6) comprises a Rayleigh backscattered signal, a Brillouin backscattered signal, or a Raman backscattered signal.

6. Device according to any one of the previous claims, **characterized in that** each channel comprises an optical fiber monitoring a cable, pipe, branch or string (7) of a star network.

7. Device according to the previous claim, **characterized in that** at least one of the channels is arranged for monitoring several cables, pipes, branches and/or strings departing in several different directions from a central position of the star network, the optical fiber of this at least one channel going back and forth with respect to the central position.

8. Device according to any one of the previous claims, **characterized in that** each channel comprises an optical fiber monitoring at least one cable, pipe, branch and/or string of at least one among a pipeline network, a transport network such like a road or rail network, a telecommunication network, an information network, or an electrical network.

9. Device according to any one of the previous claims, **characterized in that** the optical receiver (4) comprises a detector shared for all the channels.

10. Device according to any one of the previous claims, **characterized in that** the controller is arranged and/or programmed in order to allow at least two gates to be in the open state at the same time.

11. Wind farm comprising a device according to any one of the previous claims.

12. Method for distributed sensing comprising:
- generating (51), by a pump generator, an optical pump signal,
- splitting (52), by an optical pump splitter, the pump signal in a number N of channels, each channel comprising an optical fiber or a connector arranged for connecting an optical fiber, N being an integer greater than or equal to 2,
- receiving (54), by an optical receiver, a backscattered signal from the optical fiber or from the connector of each channel,
**characterized in that**:
- the splitting step is implemented with a gating system comprising a gate for each channel among the N channels, each gate associated to a given channel having:
∘ an open state allowing the pump signal to go from the pump generator to the optical fiber or the connector of the associated channel, and
∘ a closed state for which the pump signal cannot go from the pump generator to the optical fiber or the connector of the associated channel.

13. Method according to the previous claim, **characterized in that** the pump signal (5) is a pulsed pump signal (5), and each gate (21) isin its open state a longer time than the duration of the pulsed pump signal (5) in order to allow the pulsed pump signal (5) to fully pass through the gate (21) in its open state.

14. Method according to claim 12 or 13, **characterized in that** the splitting step avoids injecting the pump signal in at least two channels at the same time.

15. Method according to any one of claims 12 to 14, **characterized in that** the optical receiver comprises, for each channel, a circulator (41):
- directing the pump signal from the gate of this channel in its open state to the optical fiber or the connector of this channel but not to the optical receiver
- directing the backscattered signal from the optical fiber or the connector of this channel to the optical receiver but not to the gate of this channel.

## Patentansprüche

1. Vorrichtung (101, 102) zur verteilten Abtastung mit:
- einem Pumpgenerator (1), der zum Erzeugen eines optischen Pumpsignals (5) eingerichtet ist,
- einem optischen Pumpsplitter (2), der so konfiguriert ist, dass er das Pumpsignal (5) empfängt und das Pumpsignal in eine Anzahl N von Kanälen (3) aufteilt, wobei jeder Kanal eine optische Faser (31) oder einen Verbinder (32) umfasst, der zum Anschluss einer optischen Faser (31) angeordnet ist, wobei N eine ganze Zahl größer oder gleich 2 ist,
- einer Steuerung, die so konfiguriert ist, dass sie den Pumpensplitter (2) steuert,
- einem optischen Empfänger (4), der zum Empfangen eines rückgestreuten Signals (6) von der optischen Faser (31) oder von dem Verbinder (32) jedes Kanals eingerichtet ist,
**dadurch gekennzeichnet, dass**:
- der optische Pumpsplitter (2) ein Gatesystem umfasst, das ein Gate (21) für jeden Kanal unter den N Kanälen umfasst, wobei jedes Gate, das einem gegebenen Kanal zugeordnet ist, so angeordnet ist, dass es:
- einen offenen Zustand (211), der es dem Pumpsignal erlaubt, von dem Pumpgenerator (1) zu der optischen Faser (31) oder dem Verbinder (32) des zugeordneten Kanals zu gelangen, und
- einen geschlossenen Zustand (210), in dem das Pumpsignal (5) nicht von dem Pumpgenerator (1) zu der optischen Faser (31) oder dem Verbinder (32) des zugehörigen Kanals gelangen kann.

2. Vorrichtung nach dem vorhergehenden Anspruch, **dadurch gekennzeichnet, dass** das Pumpsignal (5) ein gepulstes Pumpsignal (5) ist und die Steuerung so angeordnet und/oder programmiert ist, dass jedes Gate (21) länger als die Dauer des gepulsten Pumpsignals (5) in seinem offenen Zustand ist, damit das gepulste Pumpsignal (5) das Gate (21) in seinem offenen Zustand vollständig durchlaufen kann.

3. Vorrichtung nach Anspruch 1 oder 2, **dadurch gekennzeichnet, dass** das Steuergerät so angeordnet und/oder programmiert ist, dass es die Injektion des Pumpsignals (5) in mindestens zwei Kanäle gleichzeitig vermeidet.

4. Vorrichtung nach einem der vorhergehenden Ansprüche, **dadurch gekennzeichnet, dass** der optische Empfänger (4) für jeden Kanal einen Zirkulator (41) umfasst, der dazu dient:
- das Pumpsignal vom Gate dieses Kanals in seinem offenen Zustand auf die optische Faser (31) oder den Verbinder (32) dieses Kanals, aber nicht auf den optischen Empfänger (4) zu richten
- das rückgestreute Signal (6) von der Lichtleitfaser (31) oder dem Verbinder (32) dieses Kanals zum optischen Empfänger, aber nicht zum Gate dieses Kanals zu leiten.

5. Vorrichtung nach einem der vorhergehenden Ansprüche, **dadurch gekennzeichnet, dass** das rückgestreute Signal (6) ein rückgestreutes Rayleigh-Signal, ein rückgestreutes Brillouin-Signal oder ein rückgestreutes Raman-Signal umfasst.

6. Vorrichtung nach einem der vorhergehenden Ansprüche, **dadurch gekennzeichnet, dass** jeder Kanal eine optische Faser umfasst, die ein Kabel, ein Rohr, einen Zweig oder einen Strang (7) eines Sternnetzes überwacht.

7. Vorrichtung nach dem vorhergehenden Anspruch, **dadurch gekennzeichnet, dass** mindestens einer der Kanäle zur Überwachung mehrerer Kabel, Rohre, Abzweigungen und/oder Stränge eingerichtet ist, die von einer zentralen Position des Sternnetzes in mehrere verschiedene Richtungen ausgehen, wobei die optische Faser dieses mindestens einen Kanals in Bezug auf die zentrale Position hin und her geht.

8. Vorrichtung nach einem der vorhergehenden Ansprüche, **dadurch gekennzeichnet, dass** jeder Kanal eine optische Faser umfasst, die mindestens ein Kabel, ein Rohr, einen Zweig und/oder einen Strang mindestens eines Pipeline-Netzes, eines Transportnetzes wie eines Straßen- oder Eisenbahnnetzes, eines Telekommunikationsnetzes, eines Informationsnetzes oder eines elektrischen Netzes überwacht.

9. Vorrichtung nach einem der vorhergehenden Ansprüche, **dadurch gekennzeichnet, dass** der optische Empfänger (4) einen für alle Kanäle gemeinsamen Detektor umfasst.

10. Vorrichtung nach einem der vorhergehenden Ansprüche, **dadurch gekennzeichnet, dass** das Steuergerät so angeordnet und/oder programmiert ist, dass mindestens zwei Gates gleichzeitig im offenen Zustand sein können.

11. Windpark mit einer Vorrichtung nach einem der vorhergehenden Ansprüche.

12. Verfahren zur verteilten Abtastung, umfassend:
- Erzeugen (51) eines optischen Pumpsignals durch einen Pumpgenerator,
- Aufteilen (52) des Pumpsignals durch einen optischen Pumpsplitter in eine Anzahl N von Kanälen, wobei jeder Kanal eine optische Faser oder einen für den Anschluss einer optischen Faser vorgesehenen Verbinder umfasst, wobei N eine ganze Zahl größer oder gleich 2 ist, größer als oder gleich 2 ist,
- Empfangen (54) eines von der Lichtleitfaser oder dem Verbinder jedes Kanals rückgestreuten Signals durch einen optischen Empfänger, **dadurch gekennzeichnet, dass**:
- der Aufteilungsschritt mit einem Gatesystem ausgeführt wird, das für jeden Kanal unter den N Kanälen ein Gate umfasst, wobei jedes Gate, das einem bestimmten Kanal zugeordnet ist, Folgendes aufweist:
- einen offenen Zustand, der es dem Pumpsignal erlaubt, vom Pumpgenerator zur optischen Faser oder zum Verbinder des zugeordneten Kanals zu gelangen, und
- einen geschlossenen Zustand, in dem das Pumpsignal nicht vom Pumpgenerator zur optischen Faser oder zum Verbinder des zugehörigen Kanals gelangen kann.

13. Verfahren nach dem vorhergehenden Anspruch, **dadurch gekennzeichnet, dass** das Pumpsignal (5) ein gepulstes Pumpsignal (5) ist und jedes Gate (21) länger als die Dauer des gepulsten Pumpsignals (5) in seinem offenen Zustand ist, damit das gepulste Pumpsignal (5) das Gate (21) in seinem offenen Zustand vollständig durchlaufen kann.

14. Verfahren nach Anspruch 12 oder 13, **dadurch gekennzeichnet, dass** der Aufteilungsschritt die Injektion des Pumpsignals in mindestens zwei Kanäle zur gleichen Zeit vermeidet.

15. Verfahren nach einem der Ansprüche 12 bis 14, **dadurch gekennzeichnet, dass** der optische Empfänger für jeden Kanal einen Zirkulator (41) umfasst:
- Leiten des Pumpsignals vom Gate dieses Kanals in seinem offenen Zustand zur optischen Faser oder zum Stecker dieses Kanals, aber nicht zum optischen Empfänger;
- das rückgestreute Signal von der optischen Faser oder dem Verbinder dieses Kanals zum optischen Empfänger, aber nicht zum Gate dieses Kanals zu leiten.

## Revendications

1. Dispositif (101, 102) destiné à une détection distribuée comprenant :
- un générateur de pompe (1) agencé pour générer un signal de pompe optique (5),
- un diviseur de pompe optique (2) configuré pour recevoir le signal de pompe (5) et diviser le signal de pompe en un nombre N de canaux (3), chaque canal comprenant une fibre optique (31) ou un connecteur (32) agencé pour connecter une fibre optique (31), N étant un nombre entier supérieur ou égal à 2,
- un dispositif de commande configuré pour commander le diviseur de pompe (2),
- un récepteur optique (4) agencé pour recevoir un signal rétrodiffusé (6) depuis la fibre optique (31) ou depuis le connecteur (32) de chaque canal,
**caractérisé en ce que** :
- le diviseur de pompe optique (2) comprend un système de porte comprenant une porte (21) pour chaque canal parmi les N canaux, chaque porte associée à un canal donné étant agencée pour présenter :
un état ouvert (211) permettant au signal de pompe d'aller du générateur de pompe (1) vers la fibre optique (31) ou vers le connecteur (32) du canal associé, et
un état fermé (210) pour lequel le signal de pompe (5) ne peut pas aller du générateur de pompe (1) vers la fibre optique (31) ou vers le connecteur (32) du canal associé.

2. Dispositif selon la revendication précédente, **caractérisé en ce que** le signal de pompe (5) est un signal de pompe pulsé (5), et le dispositif de commande est agencé et/ou programmé de sorte que chaque porte (21) se trouve dans son état ouvert plus longtemps que la durée du signal de pompe pulsé (5) afin de permettre au signal de pompe pulsé (5) de passer complètement à travers la porte (21) dans son état ouvert.

3. Dispositif selon la revendication 1 ou 2, **caractérisé en ce que** le dispositif de commande est agencé et/ou programmé afin d'éviter d'injecter le signal de pompe (5) dans au moins deux canaux en même temps.

4. Dispositif selon l'une quelconque des revendications précédentes, **caractérisé en ce que** le récepteur optique (4) comprend, pour chaque canal, un circulateur (41), agencé pour :
- diriger le signal de pompe de la porte de ce canal dans son état ouvert vers la fibre optique (31) ou vers le connecteur (32) de ce canal mais pas vers le récepteur optique (4),
- diriger le signal rétrodiffusé (6) de la fibre optique (31) ou du connecteur (32) de ce canal vers le récepteur optique mais pas vers la porte de ce canal.

5. Dispositif selon l'une quelconque des revendications précédentes, **caractérisé en ce que** le signal rétrodiffusé (6) comprend un signal rétrodiffusé Rayleigh, un signal rétrodiffusé Brillouin, ou un signal rétrodiffusé Raman.

6. Dispositif selon l'une quelconque des revendications précédentes, **caractérisé en ce que** chaque canal comprend une fibre optique surveillant un câble, un tuyau, une branche ou une chaîne (7) d'un réseau en étoile.

7. Dispositif selon la revendication précédente, **caractérisé en ce qu'au** moins l'un parmi les canaux est agencé pour surveiller plusieurs câbles, tuyaux, branches et/ou chaînes partant dans plusieurs directions différentes à partir d'une position centrale du réseau en étoile, la fibre optique de cet au moins un canal faisant des allers-retours par rapport à la position centrale.

8. Dispositif selon l'une quelconque des revendications précédentes, **caractérisé en ce que** chaque canal comprend une fibre optique surveillant au moins un câble, un tuyau, une branche et/ou une chaîne d'au moins l'un parmi un réseau de canalisations, un réseau de transport tel qu'un réseau routier ou ferroviaire, un réseau de télécommunication, un réseau d'informations ou un réseau électrique.

9. Dispositif selon l'une quelconque des revendications précédentes, **caractérisé en ce que** le récepteur optique (4) comprend un détecteur commun à tous les canaux.

10. Dispositif selon l'une quelconque des revendications précédentes, **caractérisé en ce que** le dispositif de commande est agencé et/ou programmé afin de permettre à au moins deux portes d'être à l'état ouvert en même temps.

11. Parc éolien comprenant un dispositif selon l'une quelconque des revendications précédentes.

12. Procédé destiné à une détection distribuée comprenant :
- la génération (51), par un générateur de pompe, d'un signal de pompe optique,
- la division (52), par un diviseur de pompe optique, du signal de pompe en un nombre N de canaux, chaque canal comprenant une fibre optique ou un connecteur agencé pour connecter une fibre optique, N étant un nombre entier supérieur ou égal à 2,
- la réception (54), par un récepteur optique, d'un signal rétrodiffusé depuis la fibre optique ou depuis le connecteur de chaque canal, **caractérisé en ce que :**
- l'étape de division est mise en œuvre à l'aide d'un système de porte comprenant une porte pour chaque canal parmi les N canaux, chaque porte associée à un canal donné présentant :
un état ouvert permettant au signal de pompe d'aller du générateur de pompe vers la fibre optique ou le connecteur du canal associé, et
un état fermé pour lequel le signal de pompe ne peut pas aller du générateur de pompe vers la fibre optique ou le connecteur du canal associé.

13. Procédé selon la revendication précédente, **caractérisé en ce que** le signal de pompe (5) est un signal de pompe pulsé (5), et chaque porte (21) est dans son état ouvert plus longtemps que la durée du signal de pompe pulsé (5) afin de permettre au signal de pompe pulsé (5) de passer complètement à travers la porte (21) dans son état ouvert.

14. Procédé selon la revendication 12 ou 13, **caractérisé en ce que** l'étape de division évite d'injecter le signal de pompe dans au moins deux canaux en même temps.

15. Procédé selon l'une quelconque des revendications 12 à 14, **caractérisé en ce que** le récepteur optique comprend, pour chaque canal, un circulateur (41) :
- qui dirige le signal de pompe de la porte de ce canal dans son état ouvert vers la fibre optique ou le connecteur de ce canal mais pas vers le récepteur optique
- qui dirige le signal rétrodiffusé de la fibre optique ou du connecteur de ce canal vers le récepteur optique mais pas vers la porte de ce canal.
